# EUROPÄISCHE PATENTSCHRIFT

(11) **EP 3 144 127 B1**
(45) Veröffentlichungstag und Bekanntmachung des Hinweises auf die Patenterteilung: **31.01.2018**
(21) Anmeldenummer: 16181123.7
(22) Anmeldetag: 26.07.2016
(51) Int. Cl.: B29C 65/16, A61J 1/10

(54) **MEDIZINISCHES PACKMITTEL, INSBESONDERE PHARMAVERPACKUNG SOWIE VERFAHREN ZUM VERBINDEN VON KUNSTSTOFFTEILEN VON MEDIZINISCHEN PACKMITTELN**
MEDICAL PACKAGING, IN PARTICULAR PHARMACEUTICAL PACKAGING AS WELL AS A METHOD FOR CONNECTING PLASTIC PARTS OF MEDICAL PACKAGING
MATERIAU D'EMBALLAGE MEDICAL, EN PARTICULIER PHARMACEUTIQUE ET PROCEDE DE LIAISON DE PARTIES EN PLASTIQUES DE MATERIAUX D'EMBALLAGE MEDICAL

(30) Priorität: 15.09.2015 DE 102015217635
(43) Veröffentlichungstag der Anmeldung: 22.03.2017
(73) Patentinhaber: SCHOTT Schweiz AG, 9001 St. Gallen (CH)
(72) Erfinder: Kuecuek, Mustafa, 9422 Staad (CH); Bamberg, Klaus, 9524 Zuswill SG (CH)
(74) Vertreter: Sawodny, Michael-Wolfgang

(56) Entgegenhaltungen:
- EP-A1- 2 189 270
- WO-A1-02/00144
- WO-A1-2005/100000
- JP-A- 2009 039 872
- US-A1- 2004 030 384
- US-A1- 2005 224 472
- "Simultan in einem Schuss", KUNSTSTOFFE, 1. Juni 2015 (2015-06-01), Seiten 34-37, XP055199503, DE ISSN: 0023-5563

## Beschreibung

Die Erfindung betrifft ein medizinisches Packmittel, insbesondere eine Pharmaverpackung, umfassend einen ersten thermoplastischen Kunststoffteilkörper aus einem ersten Material und einen zweiten thermoplastischen Kunststoffteilkörper aus einem zweiten Material. Erstes und zweites Material können verschieden oder auch identisch sein. Des Weiteren betrifft die Erfindung ein Verfahren zum Verbinden von Kunststoffteilen von medizinischen Packmitteln mit Hilfe von Laserschweißen.

Aus dem Stand der Technik ist für thermoplastische Kunststoffe bekannt, dass zwei Bauteile mit Hilfe von Laserschweißen miteinander verbunden werden können. Dies ist darauf zurückzuführen, dass thermoplastische Kunststoffe eine Schmelzphase besitzen. Thermoplastische Kunststoffe werden durch Laserstrahlung aufgeschmolzen. Beim Abkühlen verbinden sich die Kunststoffe, sie werden verschweißt. Allerdings ist es notwendig wegen der geringen Absorption von Laserstrahlung in den meisten thermoplastischen Kunststoffen, dass die thermoplastischen Kunststoffe durch Addition von Zusatzstoffen wie z.B. Farbpigmenten oder Ruß in ihrer Absorptionsfähigkeit verbessert werden. Bekannt ist Kunststoffschweißen mit Laser mittels Durchstrahlschweißen bei der ein oder zwei Arten von thermoplastischen Kunststoffen miteinander verbunden werden. Ein Fügepartner ist dabei ein lasertransparenter ein anderer Fügepartner ein absorbierender Kunststoff. Bei einer derartigen Schweißmethode durchdringt der Laserstrahl den oberen lasertransparenten Grundstoff und trifft auf den darunterliegenden absorbierenden Kunststoff. Der Laser schmilzt die Oberfläche des absorbierenden Kunststoffes auf. Durch den Wärmeeintrag aufgrund der Absorption schmilzt auch der transparente Fügepartner. Es kommt zu einem Überlappungsschweißen. Der Vorteil des Überlappungsschweißens besteht darin, dass die Schweißnaht im Inneren des Bauteils ohne Freisetzung von jeglichen Partikeln entsteht. Ein großer Vorteil des Laserschweißens besteht in der lokalen Wärmeeinbringung.

Aus der WO 2005/100 000 A1 ist ein Laserschweißverfahren für Kunststoffmaterialien, die ein Absorberpigment und/oder ein Streupigment umfassen, bekannt geworden. Als Absorber- und/oder Streupigment ist in der WO 2005/100 000 A1 ein Infrarot-Absorber und/oder TiO₂ in einer Konzentration bis 10 Gew.-% beschrieben. Als Kunststoff wird Polyethylen, bevorzugt LDPE eingesetzt. Die TiO₂-Partikel in der WO 2005/100 000 A1 sind Streupigmente, die zu einer Vergrößerung der optischen Weglänge führen und über die größere Weglänge zu einer höheren Absorptionswirkung. Die WO 2005/100 000 A1 zeigt ein Laserschweißverfahren und ein Produkt hergestellt mit einem Laserschweißverfahren, jedoch kein medizinisches Packmittel, insbesondere keine Pharmaverpackung, für die hohe Anforderungen in Bezug auf eine Zulassung bestehen. Das Verfahren gemäß der WO 2005/100000 A1 ist auch nicht wegen der Absorber- und/oder Streupigmente für medizinische Packmittel anwendbar.

Die US 2005/0224472 A1 zeigt ebenfalls ein Laserschweißverfahren, bei dem Absorber- und Streupigmente eingesetzt werden. Hierbei handelt es sich um TiO₂-Partikel mit einer mittleren Partikelgröße von 300 nm. Auch aus der US 2005/0224472 A1 sind keine medizinischen Packmittel bekannt geworden.

Die DE 100 03 423 A1 beschreibt ein Laserschweißverfahren, bei dem Laserpigmente zum Einsatz kommen, die die Laserstrahlung absorbieren, was zu einem Erwärmen und Aufschmelzen der zu verbindenen Komponenten führt. Auch aus der DE 100 03 423 A1 geht kein medizinisches Packmittel hervor.

Die WO 02/00144 A1 beschreibt ein Verfahren zum Verbinden von zwei Schichten eines Kunststoffes mit Hilfe von Laserlicht. Dabei weist wenigstens eine Schicht eine absorbierende Komponente auf, die Laserlicht einer bestimmten Wellenlänge absorbiert. Die absorbierende Komponente ist entweder in wenigstens einen Kunststoff oder eine Zwischenschicht eingebracht.

Die EP 2 189 270 A1 zeigt ein Verfahren zum Aufbringen eines Kunststofffilmes auf einen Anschluss eines medizinischen Packmittels, wobei zwischen dem Kunststofffilm und dem medizinischen Packmittel eine Schicht mit einem Absorbermaterial für IR-Licht eingebracht ist.

Die US 2004/0030384 A1 beschreibt die Verbindung von zwei Kunststoffteilen mit Hilfe von Laserlicht.

Aus der WO 2005/100000 A1 ist ein Verfahren zum Laserverschweißen von zwei Schichten bekannt geworden, wobei die Schichten eine hohe Absorption bei der eingestrahlten Laserwellenlänge aufweisen. Auch eine Streuschicht zwischen den beiden Schichten ist in der WO 2005/100000 A1 beschrieben.

Die US 2005/0224472 A1 beschreibt ein Verfahren, um den Absorptionskoeffizienten µₐ und den Streukoeffizienten µₛ zu beeinflussen.

Aus der JP 2009/039872 A1 ist das Verbinden von Kunststoffschichten bekannt geworden, wobei ein das Laserlicht absorbierendes Material eingesetzt wird.

Der Artikel "Simultan in einem Schuss" in Kunststoffe 6/2015, S. 34-37, beschreibt allgemein das Fügen von Thermoplasten mittels prozessgeregeltem Laserschweißen.

Nachteilig an den Verfahren nach dem Stand der Technik war, dass zumindest einem der Kunststoffteile, die mit dem Laser verschweißt werden, ein Additiv hinzugefügt werden muss, das den Laserstrahl absorbiert und partiell Wärme erzeugt.

Für die Verwendung in pharmazeutischen Verpackungen sind nur bestimmte Kunststoffe zugelassen, die im Allgemeinen keine derartigen Additive enthalten. Durch die Zugabe derartiger Additiven erlischt aber die Zulassung für den Kunststoff für die Verwendung in pharmazeutischen Verpackungen, da die Ursprungsrezeptur verändert wird, so dass ein derartiges Schweißverfahren im Bereich pharmazeutischer Produkte in der Regel nicht in Frage kommt. Bei medizinischen Packmitteln ist der Einsatz von Absorber- und/oder Streupigmenten nicht möglich.

Andere Schweißverfahren wie Ultraschweißen, Vibrationsschweißen, Hochfrequenzschweißen, Heizelementschweißen als das Laserschweißen sind für Kunststoffe im Bereich der Medizintechnik nicht anwendbar, da sie mit aufwändigen Reinigungsverfahren verbunden sind. So müssen Verunreinigungen anschließend an das Schweißen beseitigt werden.

Aufgabe der Erfindung ist es somit, ein medizinisches Packmittel, insbesondere eine Pharmaverpackung, anzugeben, die die Nachteile des Standes der Technik vermeidet. Insbesondere soll ein medizinisches Packmittel angegeben werden, bei dem Teilkörper durch Laserschweißen ohne Absorber- und Streupigmenten verbunden sind.

Diese Aufgabe wird durch ein medizinisches Packmittel gemäß Anspruch 1 und ein Verfahren gemäß Anspruch 9 gelöst. Erfindungsgemäß ist bei einem medizinischen Packmittel, insbesondere einer Pharmaverpackung, zwischen einem ersten thermoplastischen Kunststoffteilkörper und einem zweiten thermoplastischen Kunststoffteilkörper, wenigstens eine interne Grenzfläche mit Streuwirkung, angeordnet. Erfindungsgemäß sind die interne Grenzfläche und der erste und der zweite Kunststoffteilkörper frei von Absorberpigmenten und Streupigmenten. In einer besonders bevorzugten Ausführungsform ist vorgesehen, dass das medizinische Packmittel mehrere interne Grenzflächen umfasst. Besonders bevorzugt ist es, wenn die interne Grenzfläche mit Streuwirkung aus dem ersten Material des ersten thermoplastischen Kunststoffteils und/oder dem zweiten Material des zweiten thermoplastischen Kunststoffteils gebildet wird. Bevorzugt ist es, wenn die interne Grenzfläche mit Streuwirkung einen Verbindungskörper umfasst. Besonders bevorzugt ist es, wenn das Material für den ersten Kunststoffteilkörper gleich dem Material für den zweiten Kunststoffteilkörper ist, d.h. erster Kunststoffteilkörper und zweiter Kunststoffteilkörper aus demselben Material bestehen. Der Verbindungskörper ist bevorzugt als gepresster Verbindungskörper ausgeführt, der bevorzugt gemahlene Kunststoffpartikel mit Korngrenzen umfasst. Der Verbindungskörper ist frei von zusätzlichen Absorberteilchen und Absorberpigmenten und Streuteilchen und Streupigmenten, wie beispielsweise TiO₂-Teilchen. Bevorzugt ist das Material des Verbindungskörpers dasselbe Material wie das Material des ersten und/oder des zweiten thermoplastischen Kunststoffteiles. Bei Verwendung im Bereich von Arzneimitteln ist dann eine Neuzulassung nicht erforderlich, da nur zertifizierte Materialien eingesetzt werden. Das Material des Verbindungskörpers führt auf Grund seines Aufbaus mit Korngrenzen, die unter anderem durch Verpressung von Polymerpulver entstehen, zu Reflektion und Streuung des eingestrahlten Laserlichts, so dass eine für die Verschweißung erforderliche Laserabsorption analog zur Laserabsorption bei Additiven alleine durch die Reflektion und Streuung, d.h. der Verlängerung der Weglänge des eingestrahlten Lichtes erfolgen kann. Durch die Reflektion und Streuung des Laserlichtes in bzw. an der Grenzfläche wird das Kunststoffteil aufgeschmolzen und verbindet sich dann mit den beiden anderen Fügepartnern nämlich dem ersten Kunststoffteilkörper und dem zweiten Kunststoffteilkörper. Ein Absorptionspigment und/oder ein Streupigment sind bei einem derartigen Aufbau nicht notwendig.

Bei Verwendung im pharmazeutischen Bereich ist es vorteilhaft, wenn der Verbindungskörper aus demselben Material wie dem Material für den ersten und/oder zweiten Kunststoffteilköpers besteht. Die erfindungsgemäßen medizinischen Packmittel bestehen aus wenigstens zwei Kunststoffteilkörpern, die mit Hilfe wenigstens einer internen Grenzfläche mit Hilfe von Streuwirkung miteinander verbunden werden. Insbesondere handelt es sich bei den medizinischen Packmitteln um solche, die Inhaltsstoffe aufnehmen, beispielsweise Hyaluronsäure, ein Anästhetika oder Neuroleptika.

Neben dem medizinischen Packmittel, insbesondere der Pharmaverpackung, stellt die Erfindung auch ein Verfahren zum Verbinden von einem ersten Kunststoffteilkörper und einem zweiten Kunststoffteilkörper zu einem Kunststoffteil mit einer zwischen ersten Kunststoffteilkörper und zweiten Kunststoffteilkörper angeordneten, wenigstens einen Grenzfläche, zur Verfügung. Erfindungsgemäß sind die interne Grenzfläche und der erste und der zweite Kunststoffteilkörper frei von Absorberpigmenten und Streupigmenten. Besonders bevorzugt wird die interne Grenzfläche mit Streuwirkung durch einen Verbindungskörper zur Verfügung gestellt. Der Verbindungskörper ist frei von Absorberpigmenten und Streupigmenten. Bei dem Verfahren wird ein Laserstrahl mit mindestens einer Wellenlänge auf die Grenzfläche gelenkt und zwar derart, dass durch Reflektion und Streuung an der Grenzfläche oder in der Grenzfläche, die für eine Verschweißung von erstem Kunststoffteilkörper und zweitem Kunststoffteilkörper erforderliche Erwärmung auftritt.

Bedingt durch die Lichtbrechung an bzw. in der Grenzfläche bzw. durch Reflektion und Streuung an der Grenzfläche erwärmt sich diese und wird aufgeschmolzen, so dass sie sich der erste mit dem zweiten Kunststoffteilkörper verbindet, d. h. fügt. Auf diese Art und Weise werden erster und zweiter Kunststoffteilkörper miteinander verbunden. Besonders bevorzugt wird die Wellenlänge des Lasers zwischen 800 und 1500 nm, bevorzugt 800 und 1200 nm gewählt. Für das Verbinden von erstem und zweitem Kunststoffteilkörper ist bei der erfindungsgemäßen Ausgestaltung weder ein Absorber- noch ein Streupigment notwendig.

Eine ausreichende Erwärmung der Grenzfläche, insbesondere des Verbindungskörpers, wird erreicht, wenn der Laser für eine gewisse Zeit auf die Grenzfläche, insbesondere den Verbindungskörper, mit beispielsweise einer Leistung von 100 bis 600 W, bevorzugt 100 bis 300 W oder auch 600 W und mehr einwirkt. Die Einwirkzeiten sind abhängig vom Kunststoffmaterial, dem Absorptionsgrad, der Wandstärke und der Größe des Bauteiles. Um die beiden Kunststoffteile miteinander zu verbinden, werden erste und zweite Kunststoffteilkörper aneinandergelegt. Die Zeitdauer, für die der Laser auf die Grenzfläche, insbesondere den Verbindungskörpers einwirkt, ist abhängig vom Schmelzpunkt des Kunststoffmaterials, der Wandstärke, der Größe des Bauteils, der Geometrie und dem Absorptionsgrad des Kunststoffmaterials. Die Einwirkzeit

beträgt wenige Sekunden, bevorzugt 0,1 bis 100 Sekunden, insbesondere 5 bis 60 Sekunden. Der Laserstrahl arbeitet punktuell. Das Material wird punktuell erwärmt, sobald das Aufschmelzen erfolgt ist. Wenn ein Aufschmelzen punktuell erfolgt ist, wird der Laser und/oder das Bauteil weiter bewegt, d.h. zur nächsten Schweißstelle. Der komplette Schweißvorgang ist abhängig von der Größe des Bauteils.

Bei dem erfindungsgemäßen Verfahren müssen die miteinander zu verbindenden Bauteile nicht verspannt oder verpresst werden. Ein Verspannen/Verpressen wäre sogar kontraproduktiv, da bei einem Verspannen/Verpressen Spannungen in das Bauteil eingetragen werden bzw. der aufgeschmolzene Verbindungskörper bzw. das aufgeschmolzene Verbindungsteil einen Wulst ausbilden würde, was vermieden werden soll. Die Bauteile werden entweder in einer Vorrichtung gegen Verschieben gestützt oder nur aneinandergelegt.

Mehrere Möglichkeiten für die Herstellung eines Verbindungskörpers, der die interne Grenzfläche zur Verfügung stellt, sind denkbar.

Die erste Möglichkeit der Herstellung des Verbindungskörpers ist das Verpressen von Mikrogranulat. Bei diesem Verfahren wird Mikrogranulat mit einer Größe ≥ 400 µm unter Druck verpresst. Die Drücke liegen dabei materialabhängig zwischen 15 und 100 kN/cm³. Je nach Material kann der Pressling zusätzlich wärmebehandelt werden, um die Verbundfestigkeit zu erhöhen. Die Temperaturen sind materialabhängig und liegen bei teilkristallinen Werkstoffen, z. B. PE, PP, PA oder PET oberhalb der Kristallitschmelztemperatur, bei amorphen Materialien, z. B. PC, COC, COP oder PMMA oberhalb der Glasübergangstemperatur.

Alternativ zu einem Mikrogranulat kann auch ein Kunststoffpulver verpresst werden. Hierzu wird ein Kunststoffpulver mit einer Größe ≥ 10 µm unter Druck verpresst. Die Drücke liegen materialabhängig bei 15 - 100 kN/cm³. Je nach Material kann der Pressling zusätzlich wärmebehandelt werden, um die Verbundfestigkeit zu erhöhen. Die Temperaturen sind materialabhängig und liegen bei teilkristallinen Werkstoffen, z. B. PE, PP, PA, PET, oberhalb der Kristallitschmelztemperatur, bei amorphen Materialien, z. B. PC, COC, COP, PMMA oberhalb der Glasübergangstemperatur. Die Zeitdauer ist abhängig von der Bauteilgröße und Wandstärke des Körpers und liegt im Sekundenbereich.

Eine weitere Möglichkeit der Herstellung eines Verbindungskörpers ist das Spritzgießen mit physikalischem Schäumen. Hierzu wird während des Spritzgießens des Verbindungskörpers ein inertes Gas, üblicherweise CO₂ oder N₂, der Schmelze zugeführt, so dass eine Schaumstruktur entsteht. Durch die Schaumstruktur des Schweißkörpers kann der Laserstrahl an den Grenzflächen absorbiert werden, was zu einem Aufschmelzen des Schweißkörpers bzw. Schweißteils führt.

Ein weiteres alternatives Herstellverfahren ist die Bauteilherstellung des Verbindungskörpers aus Mikrotröpfchen:
Wird dieses Verfahren eingesetzt, so wird das Bauteil aus Mikrotröpfchen des thermoplastischen Kunststoffs zusammengesetzt. Dadurch ist gewährleistet, dass auch transparente Kunststoffe ihre Transparenz durch die Grenzflächen der Tröpfchen verlieren und somit der Laserstrahl absorbiert wird, was zu einem Aufschmelzen des Verbindungskörpers bzw. Verbindungsteiles führt.
Ein letztes Verfahren zur Herstellung des Verbindungskörpers ist das Spritzgießen mit reduzierter Massetemperatur. Durch Spritzgießen des Verbindungskörpers mit reduzierter Massetemperatur werden Granulatkörner teilweise nicht vollständig aufgeschmolzen, so dass dadurch die Transparenz beeinträchtigt wird und an den Grenzflächen der Laserstrahl absorbiert wird, was zu einem Aufschmelzen des Verbindungskörpers führt.

Die Erfindung soll nunmehr anhand der nachfolgenden Zeichnungen beispielhaft ohne Beschränkung hierauf beschrieben werden. Es zeigen:
- Fig. 1: Der Aufbau eines traditionellen Verfahrens zum Laserschweißen von Kunststoff;
- Fig. 2a - 2c: Draufsicht auf unterschiedliche Arten von gepressten Verbindungskörpern;
- Fig. 3: medizinisches Packmittel, insbesondere Pharmaverpackung gemäß der Erfindung.

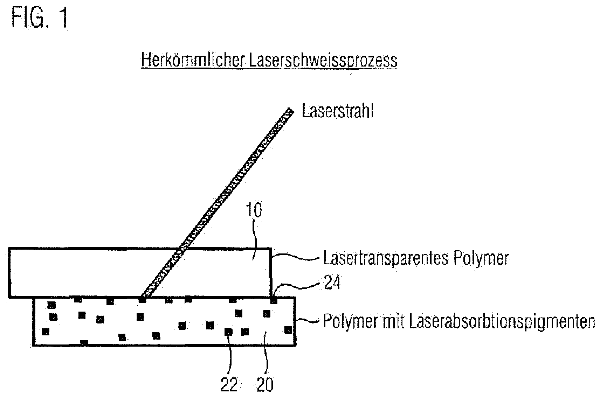

In Figur 1 ist ein Kunststofflaserschweißprozess wie er aus dem Stand der Technik bekannt ist dargestellt. Ein erster Kunststoffteilkörper 10 besteht aus einem lasertransparenten Material, d. h. einem Kunststoffmaterial, das das Laserlicht im eingestrahlten Wellenlängenbereich zu weitgehend 100% transmittiert. Das durch den ersten Kunststoffteilkörper 10 transmittierte Laserlicht 100 trifft auf den zweiten absorbierenden Kunststoffteilkörper 20. Der zweite absorbierende Kunststoffteilkörper 20 umfasst ein Additiv 22, das die eingestrahlte Laserstrahlung 100 absorbiert, und/oder streut, bspw. TiO₂ Teilchen, wodurch der zweite Kunststoffteilkörper erwärmt wird, so dass er an seiner Oberfläche 24 schmilzt. Hierdurch werden der erste Kunststoffteilkörper 10 und der zweite Kunststoffteilkörper 20 miteinander verbunden. Die Wellenlänge des Laserstrahls 100 beträgt bevorzugt zwischen 800 nm und 1100 nm.

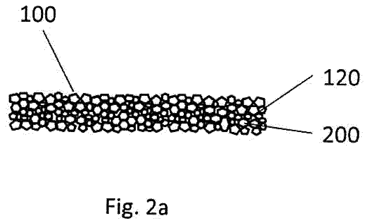

In den Figuren 2a bis 2c werden Ausführungsformen der Erfindung gezeigt, bei denen die internen Grenzflächen mit Streuwirkung durch einen separaten Verbindungskörper (100) zur Verfügung gestellt werden. Der Verbindungskörper wird dann zwischen die zu verbindenen Kunststoffteilkörper eingebracht. Selbstverständlich wäre es auch möglich, das die Grenzfläche an jedem Kunststofteilkörper selbst zur Verfügung gestellt wird.

Figur 2a zeigt die prinzipielle Ansicht eines Verbindungskörpers 100, der eine Grenzfläche 120 zur Verfügung stellt, wie er bzw. es gemäß der Erfindung Verwendung findet. Bei dem Verbindungskörper handelt es sich vorliegend um einen gepressten Sinterkörper aus gemahlenen Kunststoffpartikeln 200 mit einer Größe von ungefähr 400 Mikrometer. Figur 2a ist eine Draufsicht auf einen derartigen Verbindungskörper 100. Wie zuvor beschrieben, kann der Verbindungskörper, der eine Grenzfläche zur Verfügung stellt, auch auf andere Art und Weise hergestellt werden.

Möglich ist das Verpressen von Kunststoffpulver mit einer Größe ≥ 10 µm. Eine weitere Möglichkeit ist das Spritzgießen mit gleichzeitigem Verschäumen oder die Bauteilherstellung aus Mikrotröpfchen. Eine weitere Möglichkeit ist das Spritzgießen mit reduzierter Massetemperatur. Diesbezüglich wird auf die Beschreibung im einleitenden Teil verwiesen. In jedem Fall stellt der Verbindungskörper wenigstens eine Grenzfläche zur Verfügung, bei der ein Wärmeeintrag aufgrund einer verlängerten Weglänge durch Reflektion und Streuung des eingestrahlten Lichtes zur Verfügung gestellt wird und nicht durch Absorption an Fremdpartikeln wie im Stand der Technik. Der Verbindungskörper ist somit frei von Absorber- und Streupigmenten.

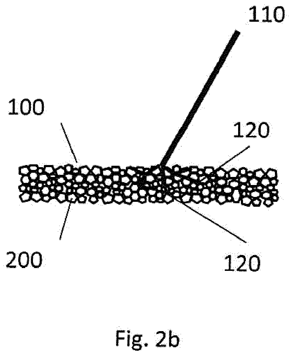

Figur 2b zeigt das Verhalten des Verbindungskörpers 100 bei Einstrahlung von Laserlicht 110. Das Laserlicht 110 wird an den Grenzflächen 120 der gemahlenen Kunststoffpartikel 200 reflektiert und gestreut. Die Reflektion und Streuung des Lichtes 110 führt zu einer Laserabsorption an den Grenzflächen 120.

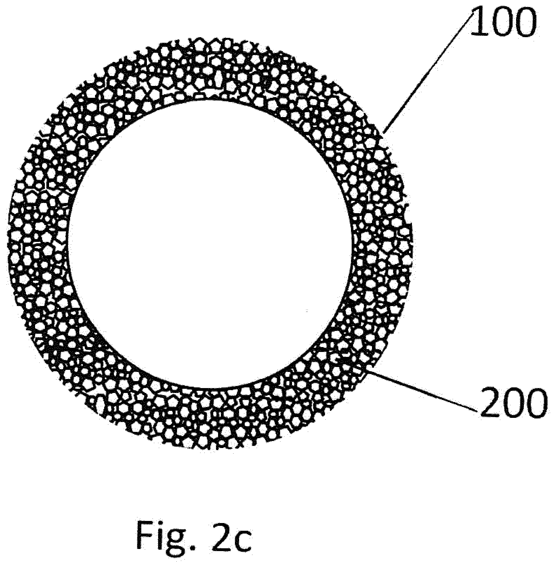

Figur 2c zeigt eine Draufsicht auf einen erfindungsgemäßen Verbindungskörper 100 in zylindrischer Bauform. Gleiche Bauteile wie in Fig. 2a - 2b sind mit denselben Bezugsziffern belegt.

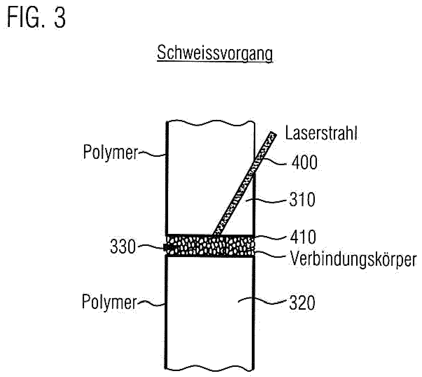

Figur 3 zeigt die Verbindung eines ersten Kunststoffteilkörpers 310 mit einem zweiten Kunststoffteilkörper 320 zu einem erfindungsgemäßen medizinischen Packmittel. Die Verbindung von erstem Kunststoffteilkörper 310 und zweitem Kunststoffteilkörper 320 erfolgt in der dargestellten Ausführungsform mittels eines Verbindungskörpers, wie es beispielsweise in Fig. 2a bis 2c dargestellt ist. Bei dem ersten Kunststoffteilkörper handelt es sich um einen für die Wellenlänge des Laserstrahls 400 transparentes Material. Durch den ersten transparenten Kunststoffteilkörper 310 hindurchtretendes Licht trifft auf den Verbindungskörper 100. Im Material 330 des Verbindungskörpers 100 wird der Laserstrahl 400 gebrochen und durch die Lichtbrechung und Streuung der Laserstrahlen 410 innerhalb des Sintermaterials mit seinen Grenzflächen der Verbindungskörper 100 oder das Kunststoffsinterteil aufgeschmolzen. Hierdurch verbindet der Verbindungskörper 100 die beiden Fügepartner, nämlich den ersten Kunststoffteilkörper 310 und den zweiten Kunststoffteilkörper 320. Ein Absorberpigment und ein Streupigment sind im zweiten Kunststoffteilkörper 320 ebensowenig wie im ersten Kunststoffteilkörper 310 und im Verbindungskörper 100 vorhanden. Die Verbindung von erstem Kunststoffteilkörper und zweitem Kunststoffteilkörper wird ohne Absorber- und Streupigmente zur Verfügung gestellt. Der zweite Kunststoffteilkörper kann transparent sein wie der erste Kunststoffteilkörper. Bevorzugt ist das Material vom ersten Kunststoffteilkörper und zweiten Kunststoffteilkörper sowie gegebenenfalls dem Verbindungskörper identisch. Die Wellenlänge des eingestrahlten Laserlichts liegt bevorzugt im Bereich 800 bis 1500 nm, bevorzugt 800 bis 1200 nm.

Mit der Erfindung wird erstmals ein medizinisches Packmittel, insbesondere eine Pharmaverpackung, angegeben, das frei von Absorberpigmenten und/oder Streupigmenten in einem zu fügenden Kunststoffteil ist. Das auf diese Art und Weise hergestellte Kunststoffteil eignet sich exzellent für eine Verwendung bei der Herstellung pharmazeutischer Produkte, bei denen eine Veränderung der Zusammensetzung des verwendeten Kunststoffmaterials nicht zulässig ist.

## Patentansprüche

1. Medizinisches Packmittel, insbesondere Pharmaverpackung, umfassend
- einen ersten thermoplastischen Kunststoffteilkörper (310) aus einem ersten Material,
- einen zweiten thermoplastischen Kunststoffteilkörper (320) aus einem zweiten Material, wobei
- zwischen dem ersten Kunststoffteilkörper (310) und dem zweiten Kunststoffteilkörper (320), wenigstens eine interne Grenzfläche mit Streuwirkung, die bevorzugt zu einer verlängerten Weglänge von eingestrahltem Licht führt, angeordnet ist, wobei
- die interne Grenzfläche und
- der erste und zweite Kunststoffteilkörper frei von Absorberpigmenten und Streupigmenten sind.

2. Medizinisches Packmittel, insbesondere Pharmaverpackung, nach Anspruch 1,
**dadurch gekennzeichnet, dass**
mehrere interne Grenzflächen vorgesehen sind, die eine hohe Streuwirkung des eingestrahlten Lichtes aufweisen.

3. Medizinisches Packmittel nach einem der Ansprüche 1 bis 2,
**dadurch gekennzeichnet, dass**
das Material des ersten Kunststoffteilkörpers und das Material des zweiten Kunststoffteilkörpers identisch sind.

4. Medizinisches Packmittel nach einem der Ansprüche 1 bis 3,
**dadurch gekennzeichnet, dass**
die interne Grenzfläche mit Streuwirkung aus dem ersten Material und/oder dem zweiten Material gebildet wird.

5. Medizinisches Packmittel nach einem der Ansprüche 1 bis 4,
**dadurch gekennzeichnet, dass**
die interne Grenzfläche mit Streuwirkung durch einen Verbindungskörper (100) ausgebildet wird, der frei von Absorberpigmenten und Streupigmenten ist.

6. Medizinisches Packmittel gemäß einem der Ansprüche 1 bis 5,
**dadurch gekennzeichnet, dass**
die interne Grenzfläche mit Streuwirkung und/oder der Verbindungskörper (100) eines der nachfolgenden Teile sind:
- ein gepresster Verbindungskörper aus einem Mikrogranulat mit einer Partikelgröße ≥ 400 µm, insbesondere aus PE, PP, PA, PET, PC, COC, COP oder PMMA;
- ein gepresstes Kunststoffschweißteil aus einem Kunststoffpulver mit einer Partikelgröße ≥ 10 µm, insbesondere aus PE, PP, PA, PET, PC, COC, COP oder PMMA;
- ein während des Spritzgießens mit einem inerten Gas versetzter Verbindungskörper;
- ein aus Mikrotröpfchen eines thermoplastischen Kunststoffs zusammengesetzter Verbindungskörper;
- ein durch Spritzgießen mit reduzierter Massetemperatur hergestellter Verbindungskörper.

7. Medizinisches Packmittel nach einem der Ansprüche 1 bis 6,
**dadurch gekennzeichnet, dass**
der Verbindungskörper (100) aus dem ersten und/oder dem zweiten Material besteht.

8. Medizinisches Packmittel nach einem der Ansprüche 1 bis 7,
**dadurch gekennzeichnet, dass**
das Packmittel einen Inhaltsstoff insbesondere Hyaluronsäure, ein Anästhetika oder ein Neuroleptika umfasst.

9. Verfahren zum Verbinden von Kunststoffteilen von medizinischen Packmitteln, insbesondere Pharmaverpackungen, umfassend einen ersten Kunststoffteilkörper (310) und einen zweiten Kunststoffteilkörper (320) sowie wenigstens eine zwischen erstem und zweitem Kunststoffteilkörper vorhandene bzw. eingebrachte interne Grenzfläche mit Streuwirkung, wobei ein Laserstrahl mit mindestens einer Wellenlänge auf die interne Grenzfläche einwirkt, derart, dass durch Reflektion und/oder Streuung eine für eine Verschweißung von erstem Kunststoffteilkörper (310) und zweitem Kunststoffteilkörper (320) erforderliche Laserabsorption auftritt, wobei die interne Grenzfläche und der erste und zweite Kunststoffteilkörper frei von Absorberpigmenten und Streupigmenten sind.

10. Verfahren nach Anspruch 9,
**dadurch gekennzeichnet, dass**
die interne Grenzfläche mit Streuwirkung einen Verbindungskörper (100) umfasst, der frei von Absorberpigmenten und Streupigmenten ist.

11. Verfahren nach einem der Ansprüche 9 oder 10,
**dadurch gekennzeichnet, dass**
durch die Absorption des Laserstrahls bedingt durch Lichtbrechung an der wenigstens ersten Grenzfläche, insbesondere dem Verbindungskörper der erste Kunststoffteilkörper und/oder der zweite Kunststoffteilkörper und/oder der Verbindungskörper aufgeschmolzen wird und erste und zweite Kunststoffteilkörper (310, 320) sich verbinden.

12. Verfahren nach einem der Ansprüche 9 bis 11,
**dadurch gekennzeichnet, dass**
die Wellenlänge zwischen 800 und 1500 nm, bevorzugt 800 bis 1200 nm liegt.

## Claims

1. Medical packaging, in particular pharmaceutical, comprising
- a first thermoplastic plastic partial body (310) made of a first material,
- a second thermoplastic plastic partial body (320) made of a second material,
wherein
- between the first plastic partial body (310) and the second plastic partial body (320), at least one internal boundary surface with a scattering effect is arranged, which preferably causes an increase in the wavelength of incident light, wherein
- the internal boundary surface and
- the first and second plastic partial body are free of absorber pigments and scattering pigments.

2. Medical packaging, in particular pharmaceutical, according to Claim 1,
**characterized in that**
a plurality of internal boundary surfaces are provided, which have a high scattering effect
of the incident light.

3. Medical packaging according to either of Claims 1 to 2,
**characterized in that**
the material of the first plastic partial body and the material of the second plastic partial body are identical.

4. Medical packaging according to any one of Claims 1 to 3,
**characterized in that**
the internal boundary surface with scattering effect is formed from the first material and/or the second material.

5. Medical packaging according to any one of Claims 1 to 4,
**characterized in that**
the internal boundary surface with scattering effect is realized by a connecting body (100), which is free of absorber pigments and
scattering pigments.

6. Medical packaging according to any one of Claims 1 to 5,
**characterized in that**
the internal boundary surface with scattering effect and/or the connection body (100) are one of the following parts:
- a pressed connection body made from a micro-granulate with a particle size greater than or equal to 400 µm, in particular made of PE, PP, PA, PET, PC, COC, COP or PMMA;
- a pressed plastic welding part made from a plastic powder with a particle size greater than or equal to 10 µm, in particular made of PE, PP, PA, PET, PC, COC, COP or PMMA;
- a connection body infused with an inert gas during the injection moulding process;
- a connection body composed of micro-droplets of a thermoplastic plastic;
- a connection body produced by injection moulding with reduced melt temperature.

7. Medical packaging according to any one of Claims 1 to 6,
**characterized in that**
the connection body (100) is composed of the first and/or second material.

8. Medical packaging according to any one of Claims 1 to 7,
**characterized in that**
the packaging comprises an ingredient, in particular hyaluronic acid, an anaesthetic or a neuroleptic.

9. Method for joining plastic parts of medical packaging, in particular pharmaceutical packaging, comprising a first plastic partial body (310) and a second plastic partial body (320), as well as at least one internal boundary surface with scattering effect which is either present or introduced between the first and second plastic partial body,
wherein
a laser beam with at least one wavelength acts on the internal boundary surface in such a way that, due to reflection and/or scattering, a laser absorption occurs that is necessary for welding the first plastic partial body (310) and second plastic partial body (320), wherein the internal boundary surface and the first and second plastic partial bodies are free of absorber pigments and scattering pigments.

10. Method according to Claim 9,
**characterized in that**
the internal boundary surface with scattering effect comprises a connecting body (100), which is free of absorber pigments and scattering pigments.

11. Method according to either of Claims 9 or 10,
**characterized in that**
due to the absorption of the laser beam caused by refraction of light at the at least first boundary surface, in particular the connection body, the first plastic partial body and/or the second plastic partial body and/or the connection body is/are melted and the first and second plastic partial body (310, 320) are connected together.

12. Method according to any of Claims 9 to 11,
**characterized in that**
the wavelength is between 800 and 1500 nm, preferably 800 to 1200 nm.

## Revendications

1. Matériau d'emballage médical, en particulier pharmaceutique, comprenant
- un premier corps de partie en plastique thermoplastique (310) constitué d'un premier matériau,
- un second corps de partie en plastique thermoplastique (320) constitué d'un second matériau,
dans lequel
- au moins une interface interne ayant un effet de diffusion est agencée entre le premier corps de partie en plastique thermoplastique (310) et le second corps de partie en plastique thermoplastique (320), menant de préférence à un trajet rallongé de la lumière irradiée,
- l'interface interne et
- les premier et second corps de partie en plastique sont dépourvus de pigments absorbants et de pigments de diffusion.

2. Matériau d'emballage médical, en particulier pharmaceutique, selon la revendication 1,
**caractérisé en ce que**
plusieurs interfaces internes sont prévues, lesquelles présentent un effet de diffusion important
de la lumière irradiée.

3. Matériau d'emballage médical selon l'une des revendications 1 à 2,
**caractérisé en ce que**
le matériau du premier corps de partie en plastique et le matériau du second corps de partie en plastique sont identiques.

4. Matériau d'emballage médical selon l'une des revendications 1 à 3,
**caractérisé en ce que**
l'interface interne ayant un effet de diffusion est formée par le premier matériau et/ou le second matériau.

5. Matériau d'emballage médical selon l'une des revendications 1 à 4,
**caractérisé en ce que**
l'interface interne ayant un effet de diffusion est conçue avec un corps de liaison (100) qui est dépourvu de pigments absorbants et
de pigments de diffusion.

6. Matériau d'emballage médical selon l'une des revendications 1 à 5,
**caractérisé en ce que**
l'interface interne ayant un effet de diffusion et/ou le corps de liaison (100) sont l'une des parties suivantes, à savoir :
- un corps de liaison pressé constitué de micro-granulés ayant une granulométrie ≥ 400 µm, en particulier de PE, PP, PA, PET, PC, COC, COP ou PMMA ;
- une partie soudée en plastique pressée constituée d'une poudre plastique ayant une granulométrie ≥ 10 µm, en particulier de PE, PP, PA, PET, PC, COC, COP ou PMMA ;
- un corps de liaison dans lequel un gaz inerte est ajouté durant le moulage par injection ;
- un corps de liaison qui est constitué de micro-gouttelettes de plastique thermoplastique ;
- un corps de liaison qui est produit par moulage par injection à une température de masse réduite.

7. Matériau d'emballage médical selon l'une des revendications 1 à 6,
**caractérisé en ce que**
le corps de liaison (100) est constitué du premier et/ou du second matériau.

8. Matériau d'emballage médical selon l'une des revendications 1 à 7,
**caractérisé en ce que**
le matériau d'emballage comprend en outre un ingrédient, en particulier de l'acide hyaluronique, un anesthésique ou un neuroleptique.

9. Procédé pour lier des parties en plastique de matériaux d'emballage médicaux, en particulier pharmaceutiques, comprenant un premier corps de partie en plastique (310) et un second corps de partie en plastique (320) ainsi qu'au moins une interface interne ayant un effet de diffusion déposée ou présente entre le premier et le second corps de partie en plastique.
dans lequel
un faisceau laser ayant au moins une longueur d'onde agit sur l'interface interne de telle sorte que, par réflexion et/ou diffusion, il se produise une absorption laser nécessaire au soudage du premier corps de partie en plastique (310) et du second corps de partie en plastique (320), l'interface interne et les premier et second corps de partie en plastique étant dépourvus de pigments absorbants et de pigments de diffusion.

10. Procédé selon la revendication 9,
**caractérisé en ce que**
l'interface interne ayant un effet de diffusion comprend un corps de liaison (100) qui est dépourvu de pigments absorbants et de pigments de diffusion.

11. Procédé selon l'une des revendications 9 ou 10,
**caractérisé en ce que**
grâce à l'absorption du faisceau laser causée par réfraction au niveau d'au moins la première interface, en particulier du corps de liaison, le premier corps de partie en plastique et/ou le second corps de partie en plastique et/ou le corps de liaison sont fondus et le premier et le second corps de partie en plastique (310, 320) sont liés.

12. Procédé selon l'une des revendications 9 à 11,
**caractérisé en ce que**
la longueur d'onde est comprise entre 800 et 1500 nm, de préférence 800 et 1200 nm.
